(19) Europäisches Patentamt
European Patent Office
Office européen des brevets

(11) Publication number: 0 173 133
B1

(12) **EUROPEAN PATENT SPECIFICATION**

(45) Date of publication of patent specification: **15.11.89**

(51) Int. Cl.$^4$: **C 01 G 49/10**, C 01 G 49/06, C 01 G 23/02, C 22 B 34/12

(21) Application number: **85109898.8**

(22) Date of filing: **06.08.85**

(54) **Process for partial oxidation of FeCl2 to FeCl3.**

(30) Priority: **08.08.84 US 638908**
**01.03.85 US 707197**

(43) Date of publication of application:
**05.03.86 Bulletin 86/10**

(45) Publication of the grant of the patent:
**15.11.89 Bulletin 89/46**

(84) Designated Contracting States:
**DE FR GB IT**

(56) References cited:
**US-A-4 046 853**
**US-A-4 140 746**
**US-A-4 179 489**

(73) Proprietor: **SCM CORPORATION**
**925 Euclid Avenue**
**Cleveland, OH 44115 (US)**

(72) Inventor: **Bonsack, James P.**
**205 Hemlock Lane**
**Aberdeen Maryland (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 173 133 B1

**Description**

This invention relates to a process for partial oxidation of solid ferrous chloride to ferric chloride. This process has particular utility as a step in a process for making $TiCl_4$ in plural stages in one of which $FeCl_2$ is a by-product of fluidized bed chlorination of ilmenite and the second of which $FeCl_2$ is a by-product of a dilute phase process for chlorinating ilmenite using $FeCl_3$ as the chlorinating agent. Such a process utilizes substantially all the chlorine to produce $TiCl_4$ and converts the iron in the ilmenite into a readily disposable form of iron oxide.

The benefits of a packed bed reactor include greater efficiency over a fluidized system because residual oxygen as it moves through the bed contacts only fresh $FeCl_2$ feed unilike the fluidized bed system where oxygen is always in contact with relatively more product $Fe_2O_3$ than $FeCl_2$ reactant. The present process allows product $Fe_2O_3$ to be discharged continuously without having fresh $FeCl_2$ feed mixed with it.

Background of the invention and prior art

Conversion of the titanium values in various titaniferous ores has been accomplished heretofore mainly by chlorination of an ore/carbon mixture under fluidized bed conditions. Usually, the chlorination agent has been elemental chlorine. By-product iron chlorides from titaniferous ores containing iron pose a problem in disposal and waste valuable chlorine. Previously chlorine values in by-product iron chlorides have been recovered by full oxidation thereof with air or oxygen to $Fe_2O_3$ and $Cl_2$.

In the present process, advantages are obtained by partial oxidation of the iron chloride as distinct from the complete oxidation contemplated in prior efforts. Instead of a single stage chlorination to produce $TiCl_4$ as most often practiced heretofore, the present invention lends itself well to a two stage process. In the first stage, a major part of the ore to be processed is chlorinated in a conventional fluidized bed reactor yielding $TiCl_4$ and iron chloride, mainly $FeCl_2$. A second smaller portion of the ore is ground to less than 0.044 mm (less than 325 mesh U.S. Standard Sieve) and chlorinated in an entrained flow reactor with $FeCl_3$ vapor. The process is successful because the chlorine values are readily recovered by partial oxidation of the $FeCl_2$ to $FeCl_3$ and $Fe_2O_3$.

There is a large amount of prior art directed to the oxidation of $FeCl_2$ or $FeCl_3$ to $Cl_2$ that attempts to solve problems inherent in this reaction.

The main problem with the full oxidation of $FeCl_2$ or $FeCl_3$ to $Cl_2$ is that at low temperatures where the thermodynamics are favorable, the reaction is slow. At higher temperatures where the reaction proceeds at a practical rate, the thermodynamics are unfavourable and the reaction is far from complete.

To overcome this problem, Dunn U.S. Patent 3,887,694 and 3,376,112 and Bonsack U.S. Patent 3,944,647 and 3,919,400 taught the use of catalysts to speed up the reaction at lower temperatures where the thermodynamics are more favorable. Dunn U.S. Patent 3,865,920 and Bonsack U.S. Patent 4,094,854 also suggest systems operating at higher temperatures where unreacted $FeCl_3$ is separated and recycled back to the oxidation zone. Dunn U.S. Patent 3,865,920 also suggests the use of a very long "flue pipe" on the oxidation zone discharge that is held at a lower temperature.

Another severe problem with $FeCl_2$ or $FeCl_3$ oxidation to $Cl_2$ is the formation of hard, dense $Fe_2O_3$ deposits on the inner walls especially near the oxidation zone discharge. Attempts to solve this problem were the subjects of U.S. Patents to Sawyer 2,642,339; Nelson, 3,050,365 and 3,092,456; Reeves, 3,793,444; and Mitsubishi, 4,073,874.

Nelson 3,092,456 introduces carbon in the discharge line of the oxidizer. I have found it to be essential to have carbon in the reaction zone itself. In Nelson's process the reaction is essentially complete. Moreover, Nelson is oxidizing iron chloride to chlorine in a gas-gas reaction rather than a gas-solid reaction as I use.

The following is a more detailed review of prior art in this field:

U.S. Patent 2,642,339 to Sawyer teaches a process for oxidizing iron halides to produce iron oxide and chlorine comprising reacting ferric chloride with dry air in the vapor phase at a temperature of from 600 to 800°C in a vertical reaction zone containing a bed of finely divided catalytic iron oxide under conditions that prevent substantial build up of reaction product on the inner surfaces of the reactor.

U.S. Patent 2,657,976 to Rowe et al show a process for producing iron oxide and titanum tetrachloride from titaniferous iron ores. According to this process, the titanium ore containing iron is subdivided, mixed with carbon and placed in a chamber. Chlorine and moist are are introduced into the chamber to produce at an elevated temperature volatile ferric chloride substantially free from titanium tetrachloride. The amount of chlorine added is the theoretical amount required to react with the iron values but not with the titanium values. Moist air is also added. Ferric chloride is volatilized and separated from the titanium concentrate, and the ferric chloride reacted immediately with oxygen to produce ferric oxide and chlorine gas. The ferric oxide and chlorine so produced are separated and the chlorine returned to react with the titanium values in the concentrate to produce titanium tetrachloride. These reactions take place in a divided reactor.

U. S. Patent 3,376,112 to Dunn et al relates to a process for flowing a molten metal salt complex of the formula $XFeCl_4$ where X is an alkali metal as a thin film over a moving bed of particulate inert material concurrently with an oxygen containing gas and recovering chlorine as a product.

U.S. Patent 3,495,936 to Jones discloses a dilute phase chlorination process for titaniferous ores. Here

the ores reacted with chlorine and a carbonaceous reducing agent in a dilute phase reactor system to yield metal chloride products, chiefly titanium tetrachloride.

U.S. Patent 3,683,590 to Dunn teaches a process for condensing iron chlorides from a gaseous stream in two steps, the first step being the cooling of the gases to about 675°C to condense ferrous chloride as a liquid and leaving a gaseous ferrous residual and then in a second step of adding chlorine gas and sodium chloride salt separately wherein the remaining $FeCl_2$ is oxidized to $FeCl_3$ which with the initial $FeCl_3$ is converted to $NaFeCl_4$ and cooling that product to a temperature above 159°C. This process is useful for recovering iron chlorides from gaseous effluent to minimize air pollution.

U.S. Patent 3,865,920 to Dunn teaches that chlorine and iron oxide are produced by the oxidation of iron chlorides and mixtures thereof, produced in the chloride process for beneficiating titaniferous ores, by injecting oxygen in the gas space above the fluidized bed.

U.S. Patent 3,925,057 to Fukushima et al teaches a process for recycling chlorine gas in the selective chlorination treatment of iron oxide ores containing titanium for the purpose of obtaining ores enriched with $TiO_2$. Here the chlorine gas introduced into the chlorination reaction is converted to ferric chloride by reaction with the iron oxide. The ferric chloride is reconverted to free chlorine by reaction with oxygen in an oxidation process, and the isolated chlorine returned to the chlorination step.

U.S. Patent 3,926,614 to Glaeser teaches a process for the selective chlorination of the iron constituent of titaniferous ores using $FeCl_3$ as the chlorinating agent and using a solid carbonaceous reductant. The $FeCl_3$ can be produced by oxidizing the $FeCl_2$ resulting from the selective chlorination thereby providing for a recycled operation.

U.S. Patent 4,046,853 to Robinson teaches the simultaneous chlorination of the iron and titanium values in an iron-containing titaniferous ores such as ilmenite. Here, the ilmenite is converted to ferrous chloride, but the resulting gaseous effluent is difficult to process to recover the titanium tetrachloride. The iron values in the effluent are partially oxidized to $Fe_2O_3$ and $FeCl_3$ thereby reducing the partial pressure of the ferrous chloride while maintaining the presence of some ferrous chloride to scavenge any chlorine emitted from the chlorination stage. The residual gaseous iron chlorides are condensed and chlorine free titanium tetrachloride may be recovered from the remaining gases.

U.S. Patent 4,055,621 to Okudaira teaches a process for obtaining chlorine from iron chloride by adding iron oxide to iron chloride prepared by chlorinating iron-containing titanium ore, in an amount above 10% by weight of the resulting mixture, charging the mixture in solid phase into a fluidizing roasting furnace for oxidation, any overflow being oxidized in a second reactor. The iron oxide thus obtained is recycled to the primary reactor for controlling the reaction temperature in the furnace.

U.S. Patent 4,140,746 to Turner et al relates to the recovery of chlorine values from iron chloride produced from the chlorination of titaniferous material containing iron and particularly from the carbochlorination of ilmenite which, for example, can be the first stage in the so-called chloride route to form titanium dioxide pigment. The iron chloride which may be ferric chloride or ferrous chloride is subjected to a combination of reduction and oxidation reactions. In the reduction reaction, ferric chloride is dechlorinated to ferrous chloride by a reducing agent suitable for producing a chloride compound for recycle to the chlorination process. In the oxition reaction ferrous chloride is oxidized to ferric oxide and ferric chloride, ferric chloride being recycled to the reduction reaction. By this method the chlorine values are recovered from the by-product iron chloride by a route which avoids the difficult reaction between ferric chloride and oxygen to produce chlorine and ferric oxide.

U.S. Patent 4,174,381 to Reeves et al teaches an improved process and an apparatus for producing chlorine and iron oxide in a multistage recirculating fluidized bed reactor wherein ferric chloride in the vapor phase is reacted with an excess of oxygen at temperatures of from 550 to 800°C. The improvement comprises utilizing a reactor that includes an initial "dense" zone and a downstream "dilute zone". In the dense zone, a fuel is burned, reactants and recirculated iron oxide particles are heated, ferric chloride is vaporized and at least 50% of the ferric chloride is converted to chlorine and iron oxide. In the downstream dilute zone, the conversion of ferric chloride is continued to greater than 95% completion.

European Patent publication 5054 discloses a process for the preparation of micaceous iron oxide which comprises reacting ferrous chloride substantially free from disruptive impurities, such as carbon, with oxygen at a temperature of 300 to 1200°C. The process can be carried out in a fluidized bed and it can form a part of a process for the recovery of chlorine values from iron chloride. The presence of carbon gives a non-micaceous iron oxide. Also a fluid bed reactor has disadvantages in that $Fe_2O_3$ cannot be discharged continuously as in a packed bed system, without entraining unreacted $FeCl_2$. This is because a fluid bed regime is a perfectly mixed reactor which makes separation of fresh feed and product impossible. The product of the present invention is nonmicaceous iron oxide.

As can be seen from the prior art above, in various methods for chlorinating titaniferous materials, e.g., ilmenite rutile, and titaniferous slags, to produce $TiCl_4$ and iron chlorides, chlorine is generally the chlorinating agent, and chlorine is recovered from iron chlorides by oxidation to $Cl_2$ and $Fe_2O_3$. In the $TiCl_4$ process where the partial oxidation reaction of the present case is especially advantageous, the charge of titaniferous material is divided into two portions, each of which is treated differently. The first is chlorinated by any conventional process using chlorine or a chlorine rich gas as the chlorinating agent to yield $FeCl_2$ or $FeCl_3$ or a mixture thereof, and $TiCl_4$. A second smaller portion is chlorinated to $TiCl_4$ and $FeCl_2$ in an entrained flow reactor with $FeCl_3$ from the partial oxidation step as described herein, where by-product

$FeCl_2$ is oxidized to $FeCl_3$ and $Fe_2O_3$. In such process, all chlorine values are utilized in the production of $TiCl_4$ or a valuable chlorinating agent, $FeCl_3$, and easily disposed of $Fe_2O_3$.

The present invention provides, therefore, an improved process for producing $FeCl_3$ by partial oxidation of $FeCl_2$ to yield $Fe_2O_3$ and $FeCl_3$. Problems attendant disposal of by-products such as $FeCl_2$ are avoided.

Brief statement of the invention

The invention provides a process for the partial oxidation of solid ferrous chloride to ferric chloride and ferric oxide with oxygen in a gas/solid reaction characterized by: (a) establishing and maintaining at a temperature of from 350°C to 675° in a reaction zone, a downwardly moving packed bed containing solid ferrous chloride and reactive carbon; (b) flowing a molecular oxygen-containing gas upwardly through said bed at a rate sufficient to provide a contact time of at least one second; (c) feeding the upper portion of said bed with particulate ferrous chloride, the proportion of molecular oxygen exceeding the stoichiometric ratio of 1 mole oxygen: 4 moles ferrous chloride, the excess oxygen being consumed in the oxidation of the reactive carbon; (d) collecting and removing a ferric oxide from the lower end of the reaction zone; and (e) recovering ferric chloride vapor and carbon oxides from the upper end of the reaction zone.

Typically, one mole of oxygen reacts with four moles of $FeCl_2$ to yield 0.667 mole of $Fe_2O_3$ and 2,667 moles of $FeCl_3$ vapor, and one additional mole of oxygen reacts with each mole of carbon present to form gaseous carbon oxides.

Better results are obtained when a porous carbon is used.

Brief description of the drawings

The invention may be understood by having reference to the annexed drawing wherein:

Figure 1 shows in diagrammatic and schematic form an apparatus in which the partial oxidation reaction of the present invention may be carried out.

Figure 2 is a drawing illustrating in diagrammatic form an integrated $TiCl_4$ process, which incorporates the oxidation process hereof where $FeCl_2$ is produced in both the primary and secondary chlorinators as a part thereof.

Detailed description of the invention

The present invention is illustrated in Figure 2 as a part of a two stage process for producing $TiCl_4$. It is convenient, therefore, to discuss such a process wherein the present process may be used.

Although a common method in the art of making $TiCl_4$ involves chlorination of an iron-containing titaniferous material in a single reactor (fluid bed, entrained flow, or other type) with $Cl_2$ or a mixture of gases including $Cl_2$, the illustrated process is distinguished from prior efforts in that chlorination of a predetermined amount of ore is done in two stages: (a) 60—90% of the ore necessary by stoichiometry being chlorinated by a conventional process with $Cl_2$ as the sole or primary chlorinating agent; and (b) 10—40% of the ore being chlorinated in a second isolated entrained flow reactor with $FeCl_3$ vapor as the chlorination agent. The exact amounts of ore chlorinated in the primary and secondary chlorinators are dependent on the Fe/Ti ratio in the feed stock. The $FeCl_3$ which is the chlorinating agent in the secondary chlorinator is produced by partial oxidation of $FeCl_2$ to $FeCl_3$ and $Fe_2O_3$. The iron in the iron-containing titaniferous material is recovered as readily disposable material ($Fe_2O_3$). Representative equations are:

First stage chlorination

(I) $2FeTiO_3+6Cl_2+3C \rightarrow 2TiCl_4+3CO_2+2FeCl_2$

(II) $2FeTiO_3+6Cl_2+6C \rightarrow 2TiCl_4+6CO+2FeCl_2$

Second stage chlorination

(III) $2FeTiO_3+12FeCl_3+3C \rightarrow 2TiCl_4+3CO_2+14\ FeCl_2$

(IV) $FeTiO_3+6FeCl_3+3C \rightarrow TiCl+3CO+7FeCl_2$

Ferrous chloride oxidation

(V) $12FeCl_2+3O_2 \rightarrow 2Fe_2O_3+8FeCl_3$

Figure 1 shows in diagrammatic and schematic form a reactor in which the partial oxidation of $FeCl_2$ is carried out in the presence of carbon. Thus, there is provided a tubular reactor 10 having suitable refractory insulation 11 and a gas outlet 12 from the upper end and a solid $Fe_2O_3$ outlet 14 fitted with a suitable valve 16. Spaced upwardly from the valve 16 and near the lower end of the reactor 10 is an oxygen distribution inlet ring 18 for admitting oxygen in counter-current relation to downwardly moving $FeCl_2$. Solid $FeCl_2$ is introduced into the side of reactor 10 at an inlet port 20 near the upper end of the reactor 10 where it is allowed to fall to the upper end of the bed of solids.

In the embodiment illustrated in Figure 1, the $FeCl_2$ and carbon are derived from a $TiCl_4$ stream containing solid $FeCl_2$ dust and carbon dust blow-over, which enters a solid-gas separator 22, e.g., a cyclone separator. The solid $FeCl_2$ and carbon enter the reactor 10 at the inlet port 20.

The interior of the reactor contains three ill-defined zones (a) an upper zone composed mainly of fresh

$FeCl_2$ and carbon; (b) an intermediate zone of mixed $FeCl_2$ and $Fe_2O_3$ and carbon and (c) a lower zone composed mainly of $Fe_2O_3$ settling into the lower end 19 of the reactor 10.

In the reactor 10, it is preferable to maintain a large excess of $FeCl_2$ solids relative to the oxygen gas. The gas velocity is such that it fails to generate a fluidized bed regime for the particle diameter of the $FeCl_2$, which is generally smaller than about 100 μm as recovered from a $TiCl_4$ process. The bed of mixed gas and solid particles can be described as a loose assembly of particles which are not fluidized and which flow by gravity in response to opening valve 16. The final $Fe_2O_3$ particle is smaller than the original $FeCl_2$ particle, being for the most part less than 30 μm in diameter. Some accumulation of $Fe_2O_3$ in the lower section of the reactor 10 is beneficial to preheat the oxygen.

Desirably the temperature in the reactor is in the range of 350°C to 675°C and preferably 525°C to 600°C.

The partial oxidation of $FeCl_2$ is desirably carried out in the presence of carbon particles. This carbon can be chlorinator blow-over dust which accompanys $FeCl_2$, or it can be separately added, or a combination of the two. In the oxygen atmosphere, the carbon burns to $CO_2$ or a mixture of $CO_2$ and CO to provide an internal source of heat in the reaction zone as illustrated below. This becomes essential in commercial scale apparatus where it is difficult to provide heat to this endothermic reaction from an external heater. The amount of carbon is that which maintains the reaction temperature within the desired temperature range and will vary, of course, with the scale of the equipment.

Referring more particularly to Figure 2, there is here shown in diagrammatic and schematic form a process flow sheet for one mode of utilizing the present invention. The numerical values associated with the compounds are in moles. Australian ilmenite ore is the iron-containing titaniferous ore used in the illustrated process. Typically, it has an analysis corresponding to the empirical formula $Fe_{0.56}TiO_{2.8}$. This Australian ore, which is obtained as a sand size material from less than 0.42 mm to greater than 0.1 mm particle size as mined (from less than 40 to greater than 140 mesh U.S. Standard Sieve) is divided into two parts. A 0.78 mole portion is introduced into a conventional fluidized bed reactor 30 from the top along with from less than 3.3 mm to greater than 0.42 mm (less than 6 to greater than 40 mesh U.S. Standard Sieve), U.S. Standard petroleum coke (coal, preferably anthracite or brown coal may be used as well). A two mole portion of chlorine gas is introduced at the bottom of the reactor 30 and the rate adjusted for fluidization and complete nonselective chlorination of the metal values in the ore. The reaction temperature is 800—1100°C, e.g, 1000°C.

The vaporous reaction products are discharged through line 32 and contain 0.78 mole of $TiCl_4$ vapor, 0.44 mole of $FeCl_2$ vapor, and 1.1 moles of carbon oxides (as $CO_2$) from primary chlorinator 30.

The balance of the ore (0.22 mole portion) is ground to an average particle size of from 10 μm to 40 μm and along with powdered carbon of similar size is introduced into a downwardly directed entrained flow reactor 44 as a secondary reactor for chlorination with $FeCl_3$ vapor from the following oxidation step. Advantageously, the added carbon here is a reactive (porous) carbon added in slight excess over stoichiometric. (See U.S. Patent 4,329,322 for discussion of useful porous carbons, particularly these having a particle size less than 100 μm and a specific surface area of greater than 10 $m^2/g$). This entrained flow (EFC) operation results in the production of a 0.22 mole portion of $TiCl_4$, a 1.24 mole portion of $FeCl_2$ vapor and carbon oxides. The gaseous efflux 46 from chlorinator 44 is combined with gaseous efflux 32 from chlorinator 30 at point 34 and quenched with a spray of liquid $TiCl_4$ 36 to a temperature of about 500—600°C which causes the $FeCl_2$ to "snow out" of the gas stream. The solid $FeCl_2$ and carbon dust blow-over from chlorinator 30 plus excess carbon used in chlorinator 44 and gaseous phases, which contain one mole of newly formed $TiCl_4$ and 1.4 moles of carbon oxides as $CO_2$ are separated in a suitable cyclone separator 38.

The $FeCl_2$, 0.44 mole from primary chlorinator 30 and 1.24 mole from secondary chlorinator 44 is then introduced into an oxidizer 40 where it is partially oxidized ("partial" in that the oxygen is limited so that complete oxidation to $Cl_2$ is not accomplished). An apparatus suitable for use in partially oxidizing $FeCl_2$ and $FeCl_3$ and $Fe_2O_3$ is shown in Figure 1. This partial oxidation yields a 0.28 mole portion of $Fe_2O_3$ and a 1.12 mole portion of $FeCl_3$. Molecular oxygen or air is introduced into the bottom of a suitable reactor 40, to effect the oxidation according to the equation:

$$12FeCl_2+3O_2 \rightarrow 8FeCl_3+2Fe_2O_3$$

In this oxidation step, only that amount of $O_2$ is used to yield $Fe_2O_3$ and $FeCl_3$ vapor plus that required to burn carbon to $CO_2$ and CO. This is in contrast to most prior art processes which attempt to force the oxidation to completion to yield $Cl_2$ and $Fe_2O_3$.

$FeCl_2$ oxidation is relatively fast around 600°C whereas $FeCl_3$ and $Fe_2Cl_6$ oxidation is slow. From the data below it was calculated that the reaction of oxygen with $FeCl_2$ goes essentially to completion at 600°C in as little as 2.4 seconds.

Thermodynamic calculations indicate that $FeCl_2$ oxidation is quite favorable in the 350—650°C range; that is, the reaction goes essentially to completion in this range.

Thermodynamic calculations also indicate that the ferric chloride vapor produced by the oxidation reaction is mainly dimeric ($Fe_2Cl_6$) rather than monomeric ($FeCl_3$). At 600°C, 80 mole percent of the Fe(III) exists as dimer; at 400°C it is about 98%. So the more correctly written oxidation equation should be:

$$12FeCl_{2(s)}+3O_2 \rightarrow 4Fe_2Cl_{6(v)}+2Fe_2O_3$$

with only a minor contribution from:

$$12FeCl_{2(s)}+3O_2 \rightarrow 8FeCl_{3(v)}+2Fe_2O_3.$$

Exemplary oxidation reactions were carried-out in a vertical quartz reactor tube 122 mm in length, about 20 mm ID, with a gas inlet at the bottom and a gas outlet at the top. The reactor tube was held at the desired temperature along 60 mm of its length by an electrical resistance heater. A bed of coarse silica sand was placed in the bottom of the reactor tube to support a bed of $FeCl_2$ powder in the 60 mm hot zone.

$FeCl_2$ powder (175 um av. dia.) was poured into the reactor tube, while flowing 1000 $cm^3$/min of $N_2$ up through the tube, to give an $FeCl_2$ bed about 28 mm in height containing from 2.0 to 2.3 grams $FeCl_2$ per mm of height. The reactor was heated to the desired temperature with the $N^2$ flow on. After reaching the desired temperature, the $N_2$ flow was stopped, a Teflon (RTM) gas collection bag was attached to the top reactor gas outlet, and $O_2$ was emitted. After the amount of $O_2$ needed to react with 15 to 17 grams of $FeCl_2$ (equivalent to about 7.6 mm of bed height) was added, the $O_2$ flow was stopped and $N_2$ at the same flow rate as $O_2$ was started. The $N_2$ flow was stopped after a sufficient amount was added to purge unreacted $O_2$ and any $Cl_2$ into the gas collection bag.

The contents of the gas collection bag were analyzed for percent $N_2$, $O_2$, and $Cl_2$ (and CO and $CO_2$ when carbon was present) by gas chromatography. From these results and the volume of $N_2$ metered to the Teflon bag, the volumes of $O_2$ and $Cl_2$ (and CO and $CO_2$ when carbon was present) were calculated.

After calculating the actual amount of $FeCl_2$ reacted, this quantity of fresh $FeCl_2$ powder was added to the top of the $FeCl_2$ bed with $N_2$ flowing as before. Another 15 to 17 g $FeCl_2$ was reacted and the procedure was repeated.

As $Fe_2O_3$ built-up in the lower section of the $FeCl_2$ bed, the reactor tube was lowered through the heater to keep the bed of unreacted $FeCl_2$ in the heated zone. $Fe_2Cl_6$ vapor condensed in the cool section of the reactor tube between the heater and the gas collection bag. This was removed occasionally to prevent pluggage of the tube.

After 2 to 3 bed displacements (120 to 200 g $FeCl_2$) had been reacted (and added) the experiment was stopped. The results from each added portion of $FeCl_2$ was then averaged.

The average $FeCl_2$ bed height was 24 mm. The average superficial $O_2$ contact time was 2.4 seconds in Examples 1—3 and 4.8 seconds in Examples 4 and 5.

Examle 1

In this run, the reaction was carried out at 490°C. Conditions and results are given in Table I.

Example 2

In this run, the reaction was carried-out at 525°C. Conditions and results are given in Table I.

Example 3

In this run, the reaction was carried-out at 600°C. Conditions and results are given in Table I.

Example 4

In this run, which is the best mode presently known to me for carrying out my invention, carbon is added to the charge of $FeCl_2$ and the reaction carried out at 600°C. One mole of carbon was mixed with each eight moles of $FeCl_2$. Conditions and results are given in Table I. The carbon used in this Example 4 was a porous brown coal (lignite) char having a particle size less than 75 µm and a specific surface area of 370 $m^2$/g. (See U.S. Patent 4,329,322).

Example 5

In this run, the conditions were the same as in Example 4 except that carbon was omitted.

The Examples illustrate a packed bed of $FeCl_2$ particles that move downwardly against a countercurrent flow of $O_2$. In a practical operating system, $Fe_2O_3$ powder is continuously discharged at the bottom of the oxidizer, as by a star valve. The average particle size of a dull, dark gray, nonlusterous $Fe_2O_3$ powder was approximately 10 µm $FeCl_3$ flows out of the oxidizer as a vapor.

If Examples 1, 2 and 3 are compared, it is seen that the reaction of $O_2$ with $FeCl_2$ is essentially complete at the higher temperatures. Comparing Examples 4 and 5 in Table I, it is seen that the presence of carbon in Example 4 reduced the amount of oxygen reacting with $Fe_2Cl_6$ from 2.4 to 0.16% and reduced the amount of unreacted oxygen from 0.5 to 0.02%. These results show that the $O_2/FeCl_2$ reaction is fast and that the reaction of oxygen is selective for $FeCl_2$ rather than $FeCl_3$.

The oxidation step of $FeCl_2$ to $FeCl_3$ is not limited to downwardly moving packed bed type reactors. Other reactor types are also useful. The use of a packed bed type system in the Examples serves to illustrate the present invention and the achievable efficiency of the $O_2/FeCl_2$ reaction when a large excess of $FeCl_2$ over $O_2$ is present in the oxidation reactor.

While this process has been described in conjunction with a dual stage process for making $TiCl_4$, it will

be understood that the process may be used independently, if desired, to make $FeCl_3$ from $FeCl_2$, or to make finely divided $Fe_2O_3$ or nonmicaceous hematite.

TABLE I

| Example No. | | 1 | 2 | 3 | 4 | 5 |
|---|---|---|---|---|---|---|
| Temperature | °C. | 490 | 525 | 600 | 600 | 600 |
| Reactor ID | cm | 2.25 | 2.25 | 1.93 | 2.25 | 2.25 |
| $O_2$ flow rate | $cm^3$ per min. | 920 | 882 | 598 | 404 | 404 |
| Flow time | seconds | 53 | 53 | 72 | 202 | 135 |
| Total volume $O_2$ | $cm^3$ | 810 | 787 | 712 | 1350 | 911 |
| $N_2$ flow Rate | $cm^3$ per min. | 920 | 882 | 598 | 404 | 404 |
| Flow time | seconds | 211 | 214 | 179 | 309 | 310 |
| Total volume $N_2$ | $cm^3$ | 3239 | 3146 | 1779 | 2082 | 2087 |
| Av. Vol. % $N_2$ | | 94.6 | 98.2 | 99.0 | 81.5 | 97.7 |
| Av. Vol. % $O_2$ | | 3.9 | 0.61 | 0.11 | 0.01 | 0.21 |
| Av. Vol. % $Cl_2$ | | 0.34 | 0.51 | 0.84 | 0.17 | 2.1 |
| Av. Vol. % CO | | | | | 3.6 | |
| Av. Vol. % $CO_2$ | | | | | 14.6 | |
| Av. Volume $O_2$ | $cm^3$ | 134.0 | 19.9 | 2.2 | 0.3 | 4.5 |
| Av. Volume $Cl_2$ | $cm^3$ | 11.3 | 16.3 | 15.1 | 4.4 | 43.8 |
| Av. Volume CO | $cm^3$ | | | | 90.0 | |
| Av. Volume $CO_2$ | $cm^3$ | | | | 380.0 | |
| % $O_2$ reacting with $Fe_2Cl_6$ [a] | | 0.7 | 1.0 | 1.1 | 0.16 | 2.4 |
| % $O_2$ not reacting | | 16.5 | 2.5 | 0.30 | 0.02 | 0.5 |
| % $O_2$ reacting with $FeCl_2$ [b] | | 82.8 | 96.5 | 98.6 | 68.3 | 97.1 |
| % $O_2$ Reacting with carbon | | | | | 31.5 | |

[a] Each 2 moles $Cl_2$ found required one mole of $O_2$ according to $2Fe_2Cl_6+3O_2 \rightarrow 6Cl_2+2Fe_2O_3$
[b] By difference.

## Claims

1. A process for the partial oxidation of solid ferrous chloride to ferric chloride and ferric oxide with oxygen in a gas/solid reaction characterized by: (a) establishing and maintaining at a temperature of from 350°C to 675°C in a reaction zone, a downwardly moving packed bed containing solid ferrous chloride and reactive carbon; (b) flowing a molecular oxygen-containing gas upwardly through said bed at a rate sufficient to provide a contact time of at least one second; (c) feeding the upper portion of said bed with particulate ferrous chloride, the proportion of molecular oxygen exceeding the stoichiometric ratio of 1

mole oxygen:4 moles ferrous chloride, the excess oxygen being consumed in the oxidation of the reactive carbon; (d) collecting and removing a ferric oxide from the lower end of the reaction zone; and (e) recovering ferric chloride vapor and carbon oxides from the upper end of the reaction zone.

2. A process as defined in Claim 1, wherein the reactive carbon is a reactive porous carbon with a specific surface area greater than 10 $m^2/g$.

**Patentansprüche**

1. Verfahren zum partiellen Oxidieren von festem Eisen(II)chlorid zu Eisen(III)chlorid und Eisen(III)oxid mit Sauerstoff in einer Gas-Feststoff-Reaktion, dadurch gekennzeichnet, daß (a) in einer Reaktionszone ein sich abwärtsbewegendes Füllkörperbett, das festes Eisen(II)chlorid und reaktionsfähigen Kohlenstoff enthält, gebildet wird; (b) ein molekulares Sauerstoff enthaltendes Gas in einer solchen Menge durch das Bette aufwärtsgeführt wird, daß die Berührungszeit mindestens eine Sekunde beträgt; (c) der obere Teil des Bettes mit feinteiligem Eisen(II) chlorid beschickt wird, wobei die anteilige Menge des molekularen Sauerstoffs größer ist als es dem stöchiometrischen Verhältnis von 1 Mol Sauerstoff:4 Molen Eisen(II)chlorid entspricht und der überschüssige Sauerstoff zum Oxidieren des reaktionsfähigen Kohlenstoffs verbraucht wird; (d) am unteren Ende der Reaktionszone Eisen(III)chlorid gesammelt und von dort abgezogen wird; und (e) am oberen Ende der Reaktionszone Eisen(III)chloriddampf und Kohlenoxide gewonnen werden.

2. Verfahren nach Anspruch 1, dadurch gekennzeichnet, daß der reaktionsfähige Kohlenstoff ein reaktionsfähiger poröser Kohlenstoff mit einer spezifishen Oberfläche von mehr als 10 $m^2/g$ ist.

**Revendications**

1. Procédé pour l'oxydation partielle de chlorue ferreux solide en chlorure ferrique et oxyde ferrique par de l'oxygène au moyen d'une réaction gaz/solide, ledit procédé étant caractérisé en ce que:

(a) on porte et maintient à une température de 350 à 675°C dans une zone de réaction, un lit se déplaçant vers le bas contenant du chlorure ferreux solide et du charbon réactif;

(b) on fait passer de bas en haut à travers ledit lit un gaz contenant de l'oxygène moléculaire à une vitesse suffisante pour fournir une durée de contact d'au mons 1 s;

(c) on charge la portion supérieure dudit lit avec du chlorure ferreux sous forme de particules, la proportion d'oxygène moléculaire étant supérieure au rapport stoechiométrique de 1 mole d'oxygène/4 moles de chlorure ferreux, l'excès d'oxygène étant consumé lors de l'oxydation du charbon réactif;

(d) on recueille et récupère l'oxyde ferrique à la partie inférieure à la zone de réaction; et

(e) on récupère le chlorure ferrique sous forme de vapeur et les oxydes de carbone à la partie supérieure de la zone de réaction.

2. Procédé suivant la revendication 1, dans lequel le charbon réactif est un charbon réactif poreux ayant une surface spécifique supérieure à 10 $m^2/g$.

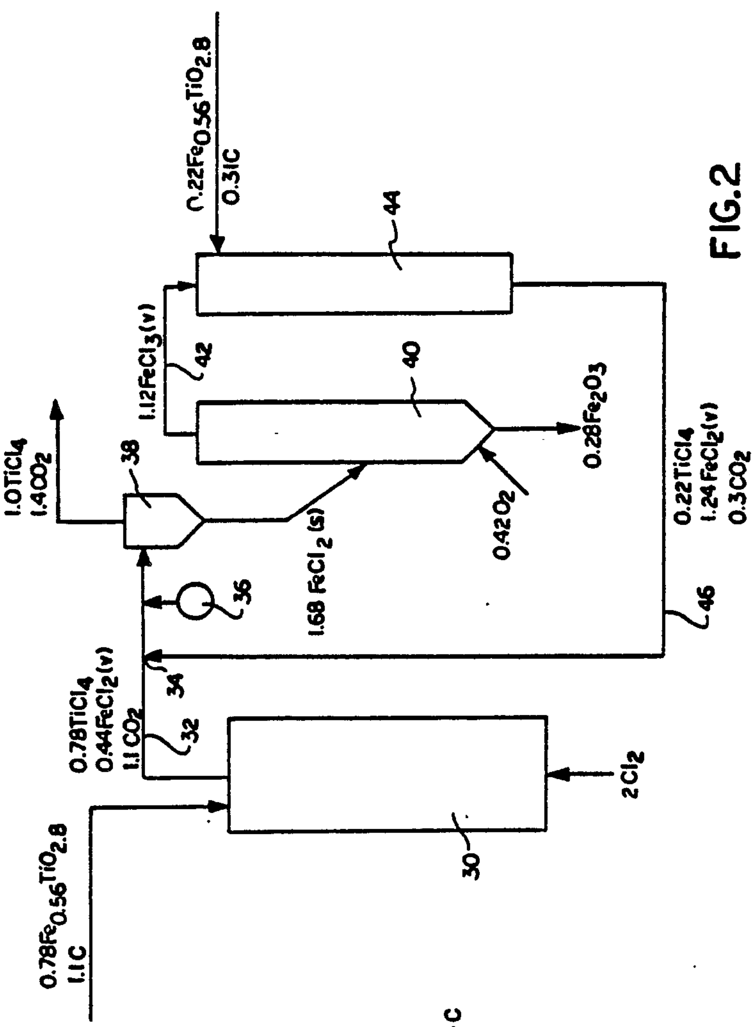
0.22Fe0.56TiO2.8
0.31C
44
1.12FeCl3(v)
42
40
0.28Fe2O3
1.0TiCl4
1.4CO2
38
1.68 FeCl2 (s)
0.42O2
0.22TiCl4
1.24FeCl2(v)
0.3CO2
36
46
0.78TiCl4
0.44FeCl2(v)
1.1CO2
32
34
0.78Fe0.56TiO2.8
1.1C
30
2Cl2

FIG.2

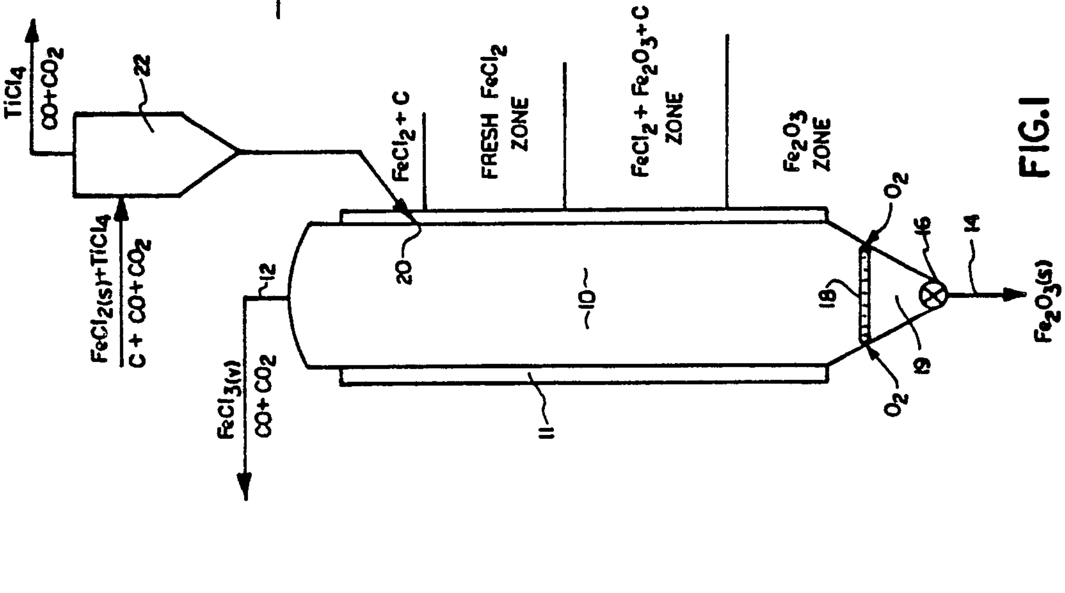
TiCl4
CO+CO2
22
FeCl2(s)+TiCl4
C+CO+CO2
FeCl2+C
FRESH FeCl2 ZONE
FeCl2+Fe2O3+C ZONE
Fe2O3 ZONE
20
12
FeCl3(v)
CO+CO2
10
11
18
19
16
14
O2
O2
Fe2O3(s)

FIG.1